(19) **Europäisches Patentamt / European Patent Office / Office européen des brevets**

(11) **EP 2 874 057 A1**

(12) # DEMANDE DE BREVET EUROPEEN

(43) Date de publication:
**20.05.2015 Bulletin 2015/21**

(21) Numéro de dépôt: **14306811.2**

(22) Date de dépôt: **14.11.2014**

(51) Int Cl.:
*G06F 3/0488* (2013.01)  *A63F 13/20* (2014.01)
*A63F 13/245* (2014.01)  *A63F 13/2145* (2014.01)

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(30) Priorité: **15.11.2013 FR 1361184**

(71) Demandeur: **Marbotic**
**33360 Quinsac (FR)**

(72) Inventeurs:
• **Merouze, Marie**
  **33360 Quinsac (FR)**
• **Bruyere, Frédéric**
  **01640 Saint-Jean le Vieux (FR)**
• **Morenton, Pascal**
  **91600 Savigny sur Orge (FR)**

(74) Mandataire: **Fantin, Laurent**
**Aquinov**
**Allée de la Forestière**
**F-33750 Beychac et Caillau (FR)**

(54) **Objet identifiable par un écran tactile capacitif**

(57) L'objet de l'invention est un objet identifiable par un écran tactile capacitif comprenant une semelle (38) avec une surface inférieure (40) en un matériau électriquement isolant, ladite semelle (38) comprenant des trous de passage (58) dans lesquels sont insérés des plots (46) en un matériau électriquement conducteur reliés par un élément électriquement conducteur (62) à des moyens de préhension (42) avec au moins une zone de saisie en un matériau électriquement conducteur, l'élément électriquement conducteur (62) et les plots (46) étant réalisés d'un seul tenant, caractérisé en ce que l'élément électriquement conducteur (62) comprend au moins une branche déformable reliant au moins un plot (46) au reste de l'élément électriquement conducteur (62), la branche déformable permettant de modifier la position du plot (46) relié à ladite branche par rapport aux autres plots (46).

Fig. 9

EP 2 874 057 A1

**Description**

La présente invention se rapporte à un objet identifiable par un écran tactile capacitif.

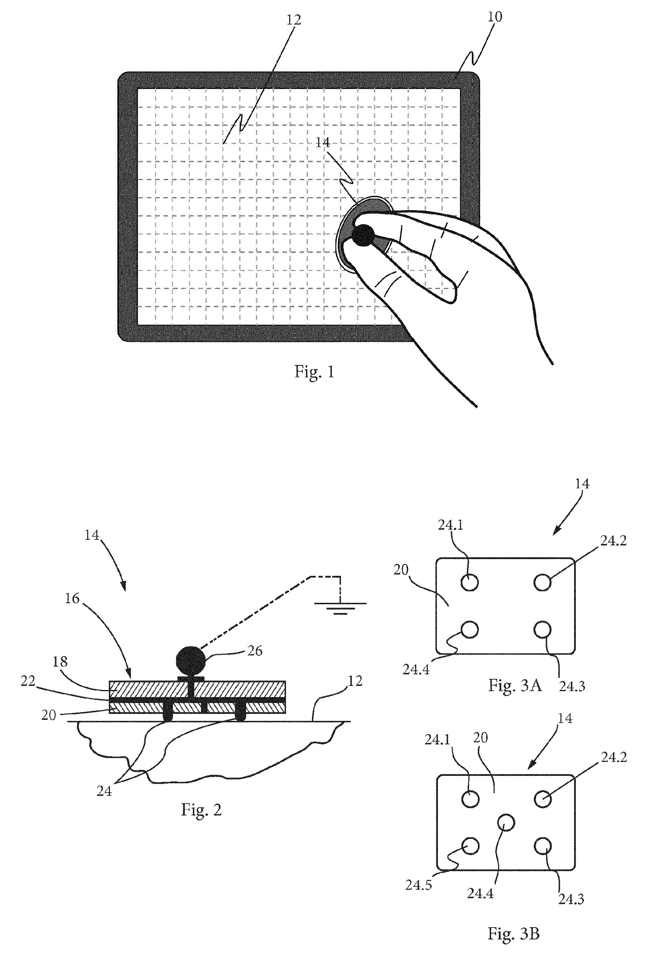

Sur la figure 1, on a représenté en 10 un appareil disposant d'une interface comprenant un écran 12 tactile capacitif, comme par exemple une tablette. Un tel écran combine les fonctions d'affichage et de pointeur. Ainsi, il permet de détecter une zone de contact au niveau de laquelle un élément tel qu'un objet 14 ou une partie du corps d'un utilisateur est mis en contact avec l'écran 12.

Dans le cas d'un écran 12 tactile capacitif, ce dernier comprend des charges électriques réparties de manière sensiblement homogène sur sa surface. Lorsqu'un élément vient en contact avec l'écran et que cet élément a un potentiel différent de celui de l'écran 12, notamment parce qu'il est relié à la terre, des charges électriques de l'écran 12 vont migrer vers l'élément. L'appareil 10 comprend des capteurs répartis à la périphérie de l'écran qui vont mesurer la valeur de la perte de charge électrique ainsi que des moyens de calcul qui en comparant les valeurs mesurées par chaque capteur vont déterminer le point de contact de l'élément avec l'écran.

L'écran 12 tactile capacitif peut être de type multipoint et permettre de détecter la position de plusieurs points de contact simultanés.

L'appareil 10 comprend également des moyens pour mettre en oeuvre un procédé, comme par exemple une application, un logiciel, ledit procédé comprenant au moins une étape consistant à générer au moins une commande au moment du contact d'au moins un point. Selon certaines applications, la commande est fonction de l'objet 14 qui vient en contact avec l'écran 12. A cet effet, l'objet 14 doit être identifiable par l'écran tactile.

Selon un mode de réalisation connu et illustré sur les figures 2, 3A et 3B, l'objet 14 comprend un corps 16 avec une partie supérieure 18, une partie inférieure 20 appelée par la suite semelle, une couche intercalaire 22 entre les parties 18 et 20, au moins un plot 24 et au moins une tige de préhension 26. Pour assurer un bon fonctionnement, la couche intercalaire 22, le ou les plots 24 et la tige de préhension 26 sont en un matériau électriquement conducteur et sont mis en contact ou reliés de manière à être au même potentiel.

En parallèle, la semelle 20 est en un matériau électriquement isolant.

Selon un mode de réalisation, la couche intercalaire 22 se présente sous la forme d'une fine plaque ou feuille métallique. La tige de préhension 26 est métallique et traverse la partie supérieur 18 jusqu'à venir en contact avec la couche intercalaire 22.

Selon un premier mode de réalisation, la couche intercalaire 22 et le ou les plot(s) sont réalisés d'un seul tenant.

Selon un deuxième mode de réalisation, la couche intercalaire 22 et le ou les plot(s) sont des pièces distinctes.

Pour rendre l'objet 14 identifiable par l'écran tactile capacitif, une solution consiste à utiliser le nombre de plots pour identifier l'objet.

Ainsi, comme illustré sur les figures 3A et 3B, le nombre de plots 24 permet de différencier les objets entre eux. Un objet 14 illustré sur la figure 3A comprend quatre plots 24.1 à 24.4 et se différencie d'un objet 14' illustré sur la figure 3B comprenant cinq plots 24.1' à 24.5'. Cette solution n'est pas pleinement satisfaisante pour les raisons suivantes :

A moins d'augmenter la surface de la semelle, le nombre de plots est limité si bien que le nombre d'objets différenciés est restreint à une dizaine.

Par ailleurs, les écrans capacitifs équipant les tablettes de l'état de l'art ne peuvent gérer qu'un nombre limité de points allant généralement de 5 à 11, ce qui limite le nombre d'objets si seul le nombre de plots est utilisé. De plus, les objets étant moins bien reconnus que les doigts pour des raisons de caractéristiques électrostatiques, des problèmes d'instabilité dans la détection sont observés quand le nombre de plots dépasse 6.

Selon un autre aspect, le fait de différencier les objets par le nombre de plots implique de prévoir autant de variantes de semelles et de couches intercalaires avec des plots que d'objets différenciés. Par conséquent, cette solution conduit à augmenter les coûts de production des objets.

Pour remédier à cet inconvénient, une solution pourrait consister à prévoir des plots séparés de la couche intercalaire. Dans ce cas, tous les objets ont la même couche intercalaire et les plots sont tous identiques. Toutefois, cette solution tend à augmenter les risques de disfonctionnement en raison d'un problème de continuité électrique entre les plots et la couche intercalaire.

La présente invention vise à remédier aux inconvénients de l'art antérieur.

A cet effet, l'invention se rapporte à un objet identifiable par un écran tactile capacitif comprenant une semelle avec une surface inférieure en un matériau électriquement isolant, ladite semelle comprenant des trous de passage dans lesquels sont insérés des plots en un matériau électriquement conducteur reliés par un élément électriquement conducteur à des moyens de préhension avec au moins une zone de saisie en un matériau électriquement conducteur, l'élément électriquement conducteur et les plots étant réalisés d'un seul tenant, caractérisé en ce que l'élément électriquement conducteur comprend au moins une branche déformable reliant au moins un plot au reste de l'élément électriquement conducteur, la branche déformable permettant de modifier la position du plot relié à ladite branche par rapport aux autres plots.

Le fait que les plots et l'élément électriquement conducteur soient réalisés d'un seul tenant permet de supprimer les dysfonctionnements liés à une discontinuité électrique dans le cas d'éléments distincts.

Le fait de prévoir au moins une branche déformable permet d'utiliser le même élément électriquement conducteur pour tous les objets ce qui tend à réduire les coûts de production. Ainsi, il est possible de déformer l'élément électriquement conducteur pour positionner les plots selon un agencement différent pour chaque objet différent.

D'autres caractéristiques et avantages ressortiront de la description qui va suivre de l'invention, description donnée à titre d'exemple uniquement, en regard des dessins annexés sur lesquels :

- la figure 1 est une représentation d'un appareil avec un écran tactile capacitif contre lequel est appliqué un objet,
- la figure 2 est une coupe d'un objet appliqué contre un écran qui illustre l'art antérieur,
- les figures 3A et 3B sont des vues de dessous de deux objets qui illustrent l'art antérieur,
- la figure 4 est une vue en perspective d'un objet qui illustre l'invention,
- la figure 5 est une vue de dessous de l'objet illustré sur la figure 4,
- la figure 5A est une coupe selon la ligne A-A de la figure 5,
- la figure 6 est une vue de face d'un appareil avec un écran tactile capacitif contre lequel est appliqué un objet selon l'invention,
- la figure 7 est une vue de face d'un élément électriquement conducteur selon un mode de réalisation de l'invention, à l'état non déformé,
- la figure 7A est une coupe selon la ligne A-A de la figure 7,
- la figure 7B est une coupe selon la ligne B-B de la figure 7,
- la figure 7C est une coupe selon la ligne C-C de la figure 7,
- la figure 8 est une vue de face de l'élément électriquement conducteur de la figure 7 à l'état déformé,
- la figure 9 est une coupe d'une partie d'un objet intégrant un élément électriquement conducteur selon l'invention,
- la figure 10 est un organigramme fonctionnel illustrant une application utilisant un procédé d'identification d'un objet selon l'invention.

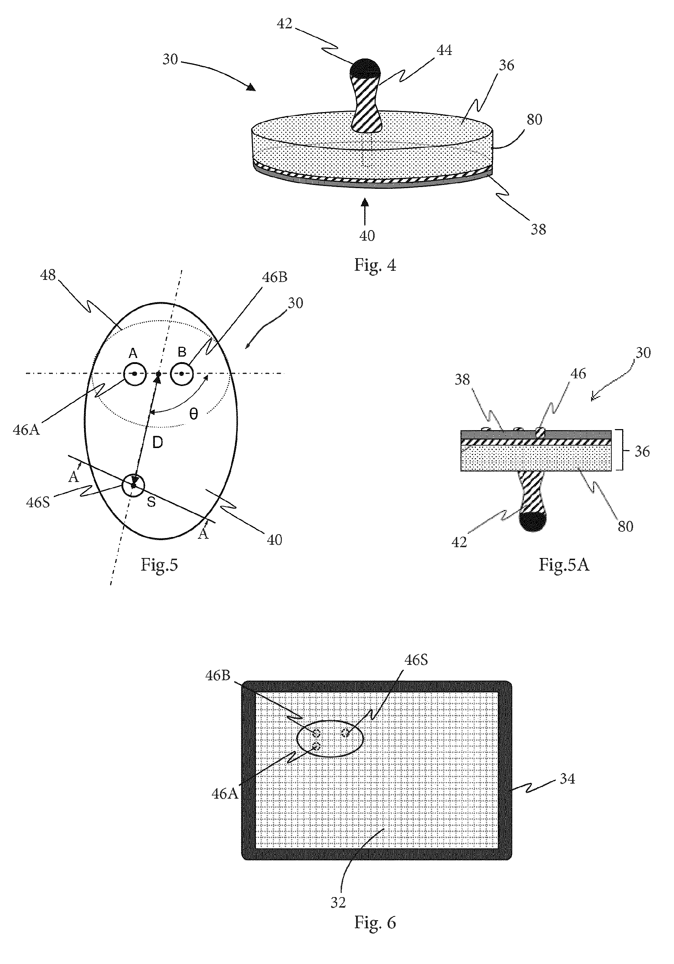

Sur les figures 4, 5 et 5A, on a représenté un objet 30 identifiable selon l'invention susceptible d'être apposé sur un écran 32 tactile capacitif d'un appareil 34 illustré sur la figure 6.

Pour la suite de la description, on entend par objet, un pion, une figurine ou tout autre élément susceptible d'être apposé sur un écran 32 et manipulé par un utilisateur.

Cet objet 30 comprend un corps 36 avec une semelle 38 dont la surface inférieure 40 fait face à l'écran 32 lorsque l'objet est posé sur l'écran 32.

La semelle 38 comprend au moins une couche en un matériau électriquement isolant qui recouvre la surface inférieure 40.

Selon un mode de réalisation, la semelle 38 comprend une couche en matériau rigide et électriquement isolant. A titre d'exemple, la semelle 38 est une plaque en bois.

L'objet 30 comprend des moyens de préhension 42 pour permettre à un utilisateur de saisir l'objet 30 et de le manipuler. Ces moyens de préhension 42 comprennent au moins une zone de saisie 44 en un matériau électriquement conducteur, en contact avec l'utilisateur lorsque ce dernier saisit l'objet 30.

Selon un mode de réalisation, les moyens de préhension 42 comportent une tige avec à une première extrémité une tête et à une seconde extrémité des moyens de liaison avec le corps 36. Selon les variantes, les formes des moyens de préhension 40 varient en fonction notamment de l'ergonomie et de l'esthétique recherchées.

L'objet 30 comprend plusieurs plots 46 en saillie par rapport à la surface inférieure 40 reliés électriquement à la ou les zone(s) de saisie 44, lesdits plots 46 étant positionnés selon un agencement donné.

Chaque plot 46 comprend une zone susceptible d'être en contact avec l'écran 32. De préférence, cette zone de contact a une forme approximativement en portion de sphère. Ainsi, chaque plot 46 comprend un point de contact qui correspond au sommet de la portion de sphère.

Chaque objet 30 comprend des moyens d'identification pour permettre à l'écran 32 de l'identifier.

Selon une caractéristique de l'invention, la fonction d'identification est assurée par l'agencement des plots 46 qui sont positionnés au niveau de la surface inférieure 40 en fonction d'un codage. Ainsi, selon l'invention, deux objets différents ont des agencements de plots différents.

Selon un avantage procuré par l'invention, il est possible d'identifier des objets différents avec un faible nombre de plots.

Selon une solution minimaliste, chaque objet comprend deux plots, les plots ayant un écartement différent pour chaque objet. Dans ce cas, le codage correspond à la distance entre les deux plots.

Selon un mode de réalisation privilégié et illustré sur la figure 5, chaque objet comprend au moins trois plots 46A, 46B et 46S.

Pour la suite de la description, les points de contact des plots 46A, 46B, 46S sont identifiés respectivement A, B, S. Les plots 46A et 46B sont également appelés plots de base et les autres plots 46S sont appelés plots satellites.

Pour tous les objets, les points de contact A et B sont séparés d'une distance d donnée, fixe. Ces points A et B forment une base de référence. Le troisième point de contact S est positionné par rapport à la base de référence formée par les points A et B et sa position varie d'un objet à l'autre. Ainsi, la position de ce troisième point S par rapport aux deux premiers points A et B assure la fonction de codage. Avantageusement, le codage correspond aux coordonnées polaires D, θ du point S par rapport à la base de référence AB, D étant la distance du segment [OS], O étant le centre du segment [AB], θ étant l'angle formé par les segments [OA] et [OS]

Pour ne pas confondre le troisième point S avec les points A et B, la distance séparant les points A et S et les points B et S est différente de d. De préférence, la distance séparant les points A et S ou les points B et S est supérieure à d. Ainsi, on définit une zone dans laquelle on s'interdit d'implanter des plots 46S. Cette zone est schématiquement matérialisée par la courbe en trait pointillé 48 sur la figure 5. De la sorte, il est avantageusement plus aisé de distinguer les points A et B utilisés pour former la base de référence.

L'invention n'est pas limitée à ce mode de réalisation. Ainsi, un objet 30 peut comprendre quatre plots, deux plots utilisés comme base de référence, la position des deux autres plots par rapport à la base de référence permettant d'identifier l'objet.

Pour assurer un contact simultané de tous les plots d'un même objet sur un écran, les plots 46 sont réalisés en un matériau déformable comme une mousse conductrice.

Selon un mode de réalisation, les plots 46 sont en silicone chargé de particules de carbone. Sur le plan géométrique et dimensionnel, les plots sont tous identiques.

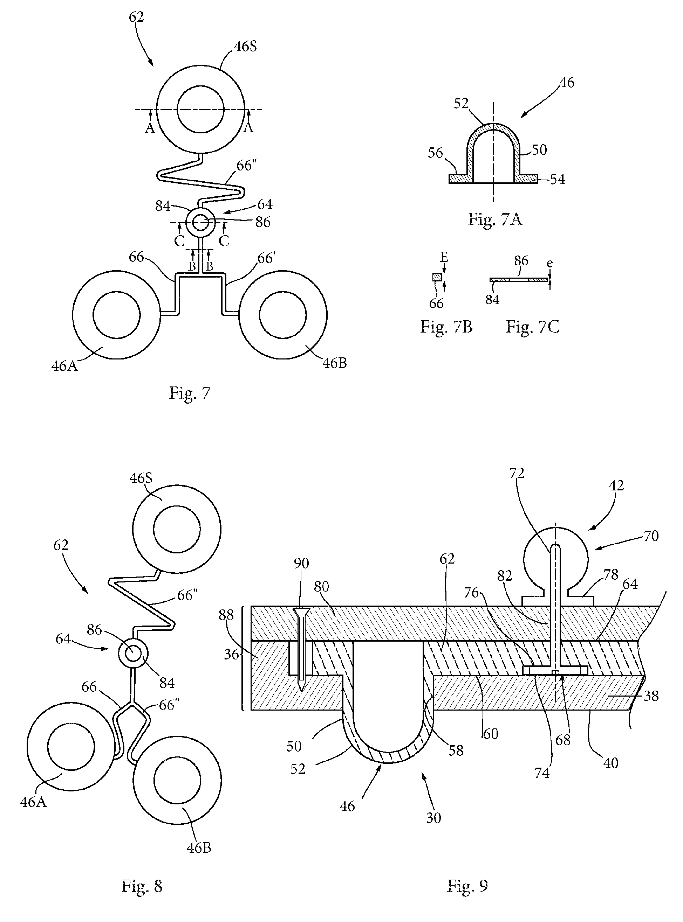

De préférence, chaque plot 46 comprend un cylindre creux 50 fermé à une première extrémité par un dôme 52 approximativement en forme de portion de sphère, comme illustré sur la figure 7A.

Le cylindre creux 50 et le dôme 52 ont une faible épaisseur, inférieure à 1 mm, afin de favoriser la déformation du plot.

Avantageusement, chaque plot 46 comprend une collerette 54, à l'extérieur du cylindre creux 50, en périphérie de sa seconde extrémité. Ainsi, la collerette 54 offre une surface d'appui 56 dans un plan perpendiculaire à l'axe du cylindre creux.

La semelle 38 comprend autant de trous de passage 58 que de plots 46. Ainsi, dans le cas d'objets avec trois plots, la semelle 38 comprend trois trous de passage 58. Les trous de passage 58 sont cylindriques et ont des axes perpendiculaires à la surface inférieure 40.

De préférence, le diamètre des trous de passage 58 est sensiblement égal au diamètre extérieur du cylindre creux 50 du plot. De ce fait, lorsqu'il est inséré dans son trou de passage 58, un plot 46 est immobile dans un plan parallèle à la surface inférieure 40.

La semelle 38 comprend une surface inférieure 40 et une surface supérieure 60 séparées d'une distance correspondant à l'épaisseur de la semelle.

Avantageusement, la hauteur du cylindre creux 50 est sensiblement égale à l'épaisseur de la semelle 38. Ainsi lorsqu'un plot 46 est inséré dans son trou de passage 58 et que la surface d'appui 56 de la collerette vient en appui contre la surface supérieure 60 de la semelle, le dôme 52 du plot vient en saillie par rapport à la surface inférieure 40 de la semelle.

Selon l'invention, l'agencement des trous de passage 58 de la semelle permet d'obtenir un codage et l'identification de l'objet par un écran tactile capacitif.

Les trous de passage 58 de la semelle 38 de chaque objet 30 permettent de positionner les plots 46 les uns par rapport aux autres. De ce fait, l'agencement des plots 46 est imposé par l'agencement des trous de passage 58.

Selon un mode de réalisation privilégié, chaque semelle 38 comprend trois trous de passage apte à recevoir trois plots 46A, 46B et 46S.

Pour tous les objets, les centres de deux trous de passage sont séparés de la distance d et forment une base de référence. Le troisième trou de passage est positionné par rapport à la base de référence formée par les centres des deux premiers trous de passage et sa position varie d'un objet à l'autre. Ainsi, la position de ce troisième point S par rapport aux deux premiers points A et B assure la fonction de codage. Avantageusement, le codage correspond aux coordonnées polaires D, θ du point S par rapport à la base de référence AB, D étant la distance du segment [OS], O étant le centre du segment [AB], θ étant l'angle formé par les segments [OA] et [OS].

Selon l'invention, les semelles 38 des objets sont différentes d'un objet à l'autre.

Pour fonctionner, chaque objet comprend un élément électriquement conducteur 62 reliant chaque plot 46 et la ou les zones de saisie 44.

Lorsque les moyens de préhension 42 sont en matériau électriquement conducteur, chaque objet comprend un élément électriquement conducteur 62 reliant chaque plot et les moyens de préhension 42.

Selon une caractéristique de l'invention, les plots 46 et l'élément électriquement conducteur 62 sont réalisés d'un seul tenant. Ainsi, les plots 46 et l'élément électriquement conducteur 62 ne forment qu'une seule et même pièce réalisée par moulage par injection.

Selon un mode de réalisation, l'élément électriquement conducteur 62 est en silicone chargé de particules de carbone.

Cette configuration permet de supprimer les dysfonctionnements liés à une discontinuité électrique dans le cas d'éléments distincts.

Selon une caractéristique de l'invention, l'élément électriquement conducteur 62 comprend au moins une branche 66 déformable reliant au moins un plot au reste de l'élément électriquement conducteur 62, la branche 66 déformable permettant de modifier la position du plot relié à ladite branche par rapport aux autres plots.

L'élément électriquement conducteur 62 comprend une zone de connexion 64 pour le relier aux moyens de préhension 42, et pour chaque plot, une branche 66 assurant la liaison entre les plots et la zone de connexion. Au moins un des branches 66 reliant un plot 46 à la zone de connexion 64 est déformable.

Avantageusement, toutes les branches 66 sont déformables.

Selon un mode de réalisation illustré sur la figure 7B, les branches 66 ont une section comprise entre de 1 à 16 mm². A titre d'exemple, les branches ont une section de 2 mm x 2 mm. Cette section permet d'obtenir un compromis entre la résistance mécanique et la capacité à se déformer des branches.

De préférence, chaque branche comprend au moins deux segments rectilignes non alignés. Cette configuration améliore la capacité des branches à se déformer, l'angle entre deux segments successifs pouvant varier par déformation de la zone de jonction des deux segments. Grâce à cette configuration, il est possible de faire varier la position des plots 46 par rapport à la zone de connexion 64 comme illustré sur la figure 8.

Le fait de pouvoir déformer les branches permet de rationaliser les coûts de production. En effet, selon l'invention, à partir du même modèle d'élément électriquement conducteur 62, il est possible de l'adapter aux différentes semelles en positionnant les plots en fonction de l'agencement des trous de passage 58 de la semelle 38.

Ainsi, seule la semelle 38 varie d'un objet à l'autre. Les autres éléments, et plus particulièrement les éléments électriquement conducteurs 62 sont identiques pour tous les objets.

Les plots 46A, 46B, 46S sont reliés à la zone de connexion 64 par des branches 66, 66', 66".

Selon un mode de réalisation, les segments de la branche 66" forment un Z. Les branches 66 et 66' sont symétriques et ont un segment commun. Ainsi, les branches 66 et 66' suivent un profil en T inversé à partir de la zone de jonction, la tête du T étant prolongée de part et d'autre par un profil en L.

La souplesse des branches 66 et 66' permet de faire varier la distance d entre les plots 46A et 46B. Ainsi, le même élément conducteur pourra être avantageusement utilisé pour fabriquer des séries d'objets, chaque série ayant une distance de base distincte des autres séries. Ceci démultiplie le nombre d'objets différenciés.

Bien entendu, l'invention n'est pas limitée à ce mode de réalisation. Cependant, cette configuration offre un bon compromis en matière de moulage, de résistance mécanique et de capacité à se déformer.

Selon un mode de réalisation, les moyens de préhension 42 sont réalisés d'un seul tenant avec l'élément conducteur 62 et les plots 46, par exemple en injection plastique. Ce mode de réalisation présente l'avantage de diminuer le nombre de pièces au montage.

Selon un autre mode de réalisation, les moyens de préhension sont métalliques et comprennent une vis 68 et un écrou 70. La vis 68 comprend une tige filetée 72 avec à une extrémité une tête 74 qui offre une surface d'appui 76 perpendiculaire à l'axe de la tige. L'écrou 70 comprend à une première extrémité une tête permettant à un utilisateur de saisir l'objet et à l'autre extrémité une collerette 78 qui offre une surface d'appui parallèle à la surface d'appui 76 de la vis.

Le corps 36 comprend une partie supérieure 80 susceptible d'être reliée à la semelle 38, avec un orifice de passage 82 traversé par la tige 72 de la vis 68, dont le diamètre est supérieur au diamètre de la tige 72 et inférieur au diamètre extérieur de la collerette 78.

Selon un mode de réalisation, la zone de connexion 64 a une forme d'anneau 84 avec un orifice 86 dont le diamètre est supérieur au diamètre de la tige 72 et inférieur au diamètre extérieur de la tête 74 de la vis.

Pour la suite de la description, on entend par hauteur une dimension selon une direction perpendiculaire à la surface inférieure 40.

Avantageusement, la semelle 38 comprend un rebord périphérique 88 contre lequel est plaquée la partie supérieure 80 du corps 36. Une fois assemblée, la semelle 38 et la partie supérieure 80 forment une cavité dans laquelle est logé l'élément électriquement conducteur 62. La semelle 38 et la partie supérieure 80 sont reliées par tout moyen approprié. Selon un mode de réalisation, des vis 90 peuvent être utilisées, comme illustré sur la figure 9. En variante, la semelle 38 et la partie supérieure 80 peuvent être collées. Avantageusement, les collerettes 54 des plots 46, les branches 66, le rebord périphérique 88 ont approximativement la même hauteur E, comme illustré sur la figure 9.

De préférence, l'anneau 84 a une épaisseur e inférieure à E pour permettre de loger la tête 74 de la vis. Comme illustré sur la figure 9, la vis 68 est vissée dans l'écrou 70 jusqu'à ce que la collerette 78 de l'écrou soit plaquée contre la partie supérieure 80 et que l'anneau 84 soit comprimé entre la tête 74 de la vis et la partie supérieure 80. Ainsi, la continuité électrique est assurée entre l'élément électriquement conducteur 62 et les moyens de préhension 42, l'anneau 84 étant plaqué contre la tête 74 de la vis.

Outre l'objet 30 proprement dit, l'invention propose également un procédé d'identification d'un objet 30 par un écran tactile capacitif 32. Ces moyens sont généralement les moyens électroniques intégrés à l'appareil 34 qui mettent en oeuvre les fonctions de détection de contacts à la surface de l'écran 34 ainsi que les fonctions de détermination des positions de contacts détectés, déjà implémentées dans l'appareil. Selon l'invention ces moyens sont configurés pour pouvoir implémenter une application particulière réalisant la reconnaissance et l'identification d'un objet selon l'invention placé par l'utilisateur sur la surface de l'écran 32.

Le procédé d'identification d'un objet consiste ainsi, lorsqu'un contact multiple est détecté, à réaliser les opérations suivantes:

1) déterminer le nombre de points de contact et leurs positions;
2) déterminer les points de contact pouvant former une base;
3) déterminer la position du ou des autres contacts, contacts satellites, relativement à la base déterminée précédemment. Cette opération n'est en principe réalisée que si une base a été détectée;

4) associer un objet particulier à l'arrangement de contacts ainsi déterminé.

La détermination du nombre et de la position des points de contact étant en principe réalisée par les moyens qui gèrent l'écran tactile, la première opération consiste essentiellement à faire l'acquisition de ces données.

La seconde opération consiste quant à elle à considérer les points de contact par paires et à mesurer la distance séparant les deux points de contact formant la paire considérée. La détection d'une base, c'est-à-dire d'une paire de contacts A et B éloignés l'un de l'autre d'une distance déterminée, égale à d, permet de reconnaître que les deux points de contacts détectés par l'écran correspondent à une base de référence.

La troisième opération consiste quant à elle à déterminer, pour chacun des autres points de contact détectés par l'écran, appelés points de contact satellites, la distance D séparant le point de contact satellite S considéré du centre O du segment [A B] et l'angle $\theta$ entre les vecteurs AB et OS caractérisant la position du point de contact S considéré par rapport à la base AB déterminée au cours de la deuxième opération

La quatrième opération consiste enfin à identifier à partir de l'arrangement du ou des points de contact satellites par rapport à la base AB, l'objet qui correspond à cet arrangement. La position des points satellites par rapport à la base permet ainsi de signer l'identité de l'objet interactif maintenu en contact avec l'écran par l'utilisateur.

Dans le cas où l'objet compte un seul point de contact satellite S, la position du point satellite ainsi calculée sera comparée avec des valeurs préenregistrées, dans la mémoire de l'appareil. La correspondance de cette position avec une position préenregistrée permettra d'identifier l'objet.

De manière analogue, dans le cas où l'objet compte deux points de contact satellites $S_1$ et $S_2$, les positions de ces deux points relativement à la base AB sont alors calculées séparément puis sont associées pour former un ensemble de positions qui peut être comparé à des ensembles de positions préenregistrés, de façon à identifier l'objet interactif comportant l'interface considérée.

Du point de vue de la réalisation pratique, il est à noter que différents problèmes se posent pour obtenir une identification non équivoque d'un objet 30 telle que celle décrite précédemment.

Un premier problème consiste à éviter une confusion possible entre un ensemble de contacts réalisés par application par l'utilisateur de plusieurs doigts sur la surface de l'écran tactile 32 considéré, l'application simultanée de trois ou quatre doigts plus précisément, et un ensemble de contacts consécutif à la mise en contact de la zone de contact d'un objet avec la surface du même écran 32. Ainsi, l'objet 30 doit être configuré de façon à éviter le plus possible que le contact sur l'écran de l'objet puissent être simulé par le contact de doigts reproduisant, fortuitement ou non, l'arrangement des plots de l'objet 30.

Pour ce faire, dans une forme de réalisation préférée, les deux plots 46A et 46B formant la base ont des centres distant d'une distance d à la fois supérieure à la distance minimale permettant de reconnaître deux contacts distincts, distance liée aux caractéristiques de l'écran, et suffisamment faible pour ne pas pouvoir correspondre à deux contacts réalisés par deux doigts appliqués simultanément sur la surface de l'écran. Ainsi; typiquement, sachant que la distance minimum entre les points de contact de deux doigts placés côte à côte sont distant d'environ 15 mm pour une main d'individu adulte et d'environ 12 mm pour une main d'enfant, une distance d comprise entre 8 mm et 12 mm entre les deux plots 46A et 46B formant une base, permet avantageusement de prévenir l'identification erronée d'une base.

Un premier problème consiste dans le fait que, compte tenu de la taille des objets 30 destinés à interagir avec l'écran 32, il est important de pouvoir déterminer le nombre d'objets différents qu'il est possible d'identifier avec un objet présentant une surface inférieure 40 donnée et un nombre total de plots 46 limité à trois ou quatre points. Il est en effet important, pour qu'un tel système d'interaction soit économiquement et fonctionnellement intéressant, de pouvoir identifier le plus possible d'objets différents, autrement dit de pouvoir créer le plus possibles d'agencements de plots pouvant être différentiés les uns des autres en faisant simplement varier la position des plots satellites, sachant que les dimensions de la surface inférieure 40 sont par ailleurs limitées.

En effet, les objets destinés à interagir avec l'appareil considéré devront présenter des dimensions en rapport avec les dimensions de l'écran 32, en tenant compte notamment du fait que certains besoins applicatifs pourront nécessiter la présence simultanée de deux ou trois objets sur l'écran.

Selon l'invention, l'identité d'un objet est définie par la position d'un point de contact satellite S par rapport à une base formée de deux point de contact A et B, ces points de contact occupant l'un par rapport à l'autre une position déterminée.

Par suite le nombre de positions que peut occuper un point de contact satellite S par rapport à la base AB dépend de la précision avec laquelle les positions des différents points de contact à la surface de l'écran 12 peuvent être déterminées par l'appareil 34.

En pratique, pour un point de contact de centre théorique C, la position détectée par l'appareil pourra correspondre à n'importe quel point situé à l'intérieur d'un cercle de centre C et de rayon r, r dépendant de la résolution de son écran 32. Cette incertitude de position se traduit dans le cadre de l'invention par une incertitude sur la détermination de la distance D et de l'angle $\theta$ qui caractérise la position d'un point de contact satellite S vis-à-vis de la base AB.

Par suite, la distance D et l'angle θ associés au point S peuvent être exprimés comme suit :

$$D = D_{calculée} \pm 2r,$$

$$\theta = \theta_{calculé} \pm \alpha$$

α représentant l'incertitude sur l'orientation de la base AB sur la surface de l'écran, incertitude qui est quant à elle définie par la relation suivante:

$$\alpha = 2 \, atan \, (2r/d),$$

dans laquelle d représente la distance séparant les centres des points de contact formant la base AB.

En considérant le principe d'identification retenu dans le cadre de l'invention, la détermination de la valeur de l'erreur angulaire α permet avantageusement de caractériser le nombre d'arrangements différents de points de contact qui peuvent être distingués par l'écran.

En effet, étant donnée l'erreur angulaire α qui peut être commise sur la détermination de l'orientation de la base AB à la surface de l'écran 12, le nombre de valeurs possibles pour θ (i. e. le nombre de positions angulaires distinctes discernables pour un point de contact satellite S) est sensiblement égal à 180/α, soit 90/(atan(2r/d), sachant qu'il est nécessaire de tenir compte du fait qu'un même objet physique, selon l'invention, doit pouvoir être positionné dans des orientations différentes sur la surface de l'écran 12, et toujours être reconnu, de sorte que, vu le principe d'identification retenu dans le cadre de l'invention, seul un secteur angulaire de 180° autour de la base AB peut être identifiable.

Ainsi, si l'on fixe la valeur de la distance d séparant les deux points A et B formant la base détectée par l'écran à une valeur donnée, le nombre de valeurs possibles de θ, est une fonction de la donnée r, c'est-à-dire de l'incertitude qui entache la détermination par l'écran considéré de la position des points de contact.

Ce nombre de valeurs possibles de θ, ainsi déterminé, couplé au nombre de valeurs possibles pour la distance D séparant le point S du centre de la base AB, lui-même fonction de r, permet d'évaluer de manière avantageusement simple le nombre de positions possible d'un point S vis-à-vis de la base AB, en fonction de la taille de la surface inférieure 40 que présente l'objet 30. Le nombre d'agencements de plots distincts est ainsi fonction du nombre d'objets que l'on souhaite pouvoir simultanément mettre en contact avec la surface de l'écran, de la taille de ces objets (i.e. de la taille de la zone de contact) et des caractéristiques de l'écran tactile 32.

Ainsi, par exemple, pour un objet 30 présentant une base constituée de deux points de contact A et B distance de 25 mm et pour un écran tactile 12 présentant un rayon r d'incertitude égal à 3 mm, on obtient par exemple 6 valeurs distinctes indentifiables pour l'angle θ, valeurs réparties sur sensiblement 180°, ce qui, pour une distance maximale D égale à 50 mm permet d'identifier plusieurs dizaines de positions distincte du point S par rapport à la base AB et donc plusieurs dizaines d'objets distincts.

Le principe d'identification selon l'invention permet donc avantageusement d'identifier un grand nombre d'objets à l'aide de seulement trois points de contact A, B et S. ce nombre peut par ailleurs être encore augmenté de deux manières :

- en utilisant différentes valeurs de distance de base d,
- ou en utilisant un type d'interface tangible selon l'invention comportant deux points satellites $S_1$ et $S_2$.

Il est à noter que comme cela a été dit précédemment le nombre total de points de contact selon l'invention est volontairement limité à quatre, deux points étant disposés de façon à former une base AB, la disposition des deux autres points par rapport aux points A et B définissant l'identité de l'objet. Une augmentation supplémentaire du nombre de points de contact satellites n'est pas souhaitable, car elle induirait un risque de manque de fiabilité du matériel. Il est en effet difficile d'assurer le contact de nombreux points simultanés, sans maitriser de manière étroite la coplanarité des points de contact.

Cette invention possède notamment un domaine d'application industrielle dans le jeu éducatif. En effet, les objets peuvent prendre la forme de chiffres ou de lettres, ou encore de symboles géométriques, et leur mise en contact avec la surface tactile génère des réponses associées à chaque objet. Par exemple, poser le chiffre 3 sur la tablette déclenche l'apparition de trois éléments à l'écran, ainsi que l'écoute du mot « trois » pré-enregistré. On peut imaginer le même système, avec les lettres, pour favoriser l'apprentissage de la lecture, avec des formes, pour favoriser la reconnaissance d'éléments géométriques, avec des couleurs, etc...

Par extension, tous types de jeux à visée non spécifiquement éducative pourraient également bénéficier de cette technologie.

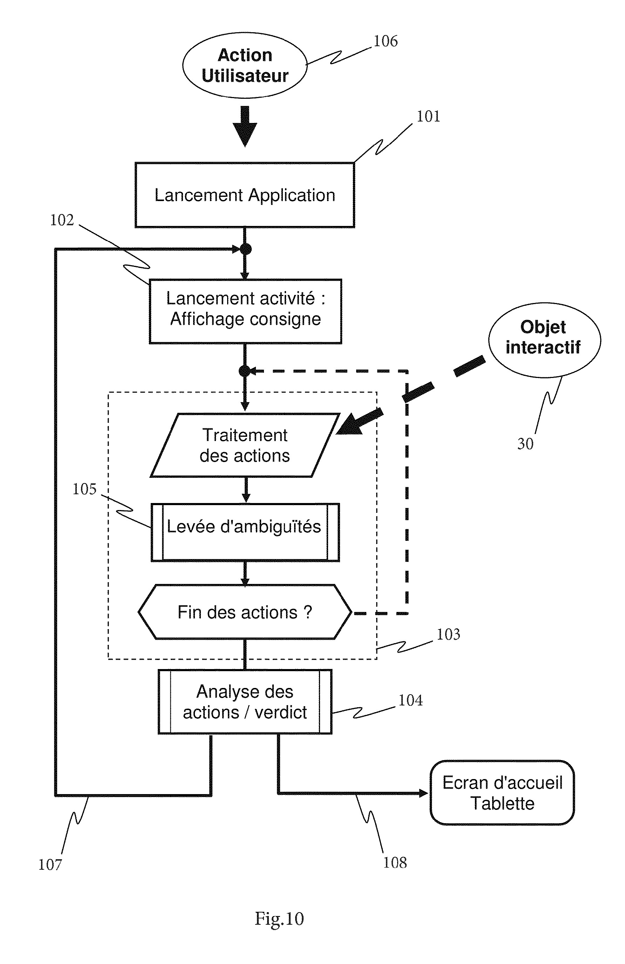

La figure 10 présente l'organigramme de principe de l'application, organigramme qui permet de mettre en évidence les phases de mise en oeuvre dans lesquelles le système d'interfaces tangibles selon l'invention peut avantageusement montrer son efficacité.

Cette application enchaîne un certain nombre d'étapes qui selon le contexte matériel (tablette tactile utilisée) et l'utilisateur auquel l'application est destinée, peuvent être implémentées de différentes façons:

- Une première étape 101 qui consiste dans le lancement de l'application considérée, lancement qui résulte d'une action 106 de l'utilisateur. Ce lancement peut s'accompagner par exemple de la proposition d'un ensemble d'activités, sous forme d'icônes, que l'utilisateur peut choisir en touchant l'icône correspondante;

- une deuxième étape 102 qui consiste au lancement de l'activité choisie. Typiquement, une consigne est posée à l'utilisateur sous forme graphique, orale ou encore textuelle.

- une troisième étape 103, qui consiste en l'exécution de l'activité choisie cette exécution supposant le dialogue avec la tablette au travers d'objets interactifs.

- une quatrième étape 104 qui consiste à la présentation à l'utilisateur d'un retour sous forme audiovisuelle, retour consistant par exemple en la validation de la conformité des opérations exécutées par l'utilisateur par rapport aux résultats attendus pour cette activité, ainsi qu'en une invitation ou à prolonger (flèche 107) ou à quitter (flèche 108) l'activité considérée.

**Revendications**

1. Objet identifiable par un écran tactile capacitif comprenant une semelle (38) avec une surface inférieure (40) en un matériau électriquement isolant, ladite semelle (38) comprenant des trous de passage (58) dans lesquels sont insérés des plots (46) en un matériau électriquement conducteur reliés par un élément électriquement conducteur (62) à des moyens de préhension (42) avec au moins une zone de saisie (45) en un matériau électriquement conducteur, l'élément électriquement conducteur (62) et les plots (46) étant réalisés d'un seul tenant, **caractérisé en ce que** l'élément électriquement conducteur (62) comprend au moins une branche (66) déformable reliant au moins un plot (46) au reste de l'élément électriquement conducteur (62), la branche (66) déformable permettant de modifier la position du plot (46) relié à ladite branche par rapport aux autres plots (46).

2. Objet selon la revendication 1, **caractérisé en ce que** l'élément électriquement conducteur (62) comprend une zone de connexion (64) pour le relier aux moyens de préhension (42), et pour chaque plot, une branche (66) assurant la liaison entre les plots (46) et la zone de connexion (64).

3. Objet selon la revendication 2, **caractérisé en ce qu'**au moins une branche (66) reliant un plot (46) à la zone de connexion (64) est déformable.

4. Objet selon l'une des revendications précédentes, **caractérisé en ce que** les branches (66) déformables ont une section comprise entre 1 à 16 mm$^2$.

5. Objet selon l'une des revendications précédentes, **caractérisé en ce que** chaque branche (66) comprend au moins deux segments rectilignes non alignés, l'angle entre deux segments successifs pouvant varier par déformation de la zone de jonction des deux segments.

6. Objet selon la revendication 5, **caractérisé en ce qu'**une branche (66") comprend des segments formant un Z.

7. Objet selon la revendication 5, **caractérisé en ce que** deux branches (66, 66') suivent un profil en T inversé, la tête du T étant prolongée de part et d'autre par un profil en L.

8. Objet selon l'une des revendications précédentes, **caractérisé en ce que** les moyens de préhension (42) comprennent un écrou (70) et une vis (68) avec une tige filetée (72) et une tête (74) et **en ce que** la zone de connexion (64) a une forme d'anneau (84) avec un orifice (86) dont le diamètre est supérieur au diamètre de la tige (72) et inférieur au diamètre extérieur de la tête (74) de la vis.

9. Objet selon la revendication précédente, **caractérisé en ce que** l'anneau (84) a une épaisseur inférieure à la hauteur des branches (66) pour permettre de loger la tête (74) de la vis.

10. Objet selon la revendication 8 ou 9, **caractérisé en ce qu'**il comprend une partie supérieure (80) susceptible d'être reliée à la semelle (38), avec un orifice de passage (82) traversé par la tige (72) de la vis (68) et **en ce que** la semelle (38) comprend un rebord périphérique (88) contre lequel est plaquée la partie supérieure (80) de manière à ce que la semelle (38) et la partie supérieure (80) forment une cavité dans laquelle est logé l'élément électriquement conducteur (62).

Fig. 1

Fig. 2

Fig. 3A

Fig. 3B

Fig. 4

Fig.5

Fig.5A

Fig. 6

Fig. 7

Fig. 7A

Fig. 7B    Fig. 7C

Fig. 8

Fig. 9

Action
Utilisateur                    106

Lancement Application          101

102

Lancement activité :
Affichage consigne

Objet
interactif

30

Traitement
des actions

105

Levée d'ambiguïtés

Fin des actions ?

103

Analyse des
actions / verdict          104

Ecran d'accueil
Tablette

107                            108

Fig.10

Europäisches
Patentamt

European
Patent Office

Office européen
des brevets

## RAPPORT DE RECHERCHE EUROPEENNE

Numéro de la demande

EP 14 30 6811

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | US 2011/227871 A1 (CANNON BRUCE [US]) 22 septembre 2011 (2011-09-22) * abrégé; figures 18-40 * * alinéa [0143] - alinéa [0148] * * alinéa [0170] - alinéa [0172] * * alinéa [0174] - alinéa [0177] * * alinéa [0181] - alinéa [0187] * ----- | 1-10 | INV. G06F3/0488 A63F13/20 A63F13/245 A63F13/2145 |
| A | EP 2 405 330 A2 (DISNEY ENTPR INC [US]) 11 janvier 2012 (2012-01-11) * abrégé; figures 1a, 2-4 * * alinéa [0010] - alinéa [0016] * * alinéa [0018] - alinéa [0029] * * alinéa [0035] - alinéa [0040] * ----- | 1-10 | |
| A | WO 2007/017848 A2 (N TRIG LTD [IL]; ZACHUT RAFI [IL]; PERSKI HAIM [IL]; RIMON ORI [IL]; K) 15 février 2007 (2007-02-15) * abrégé; figure 6E * * page 15, ligne 26 - page 19, ligne 15 * ----- | 1-10 | |

DOMAINES TECHNIQUES
RECHERCHES (IPC)

G06F
A63F
G09B

Le présent rapport a été établi pour toutes les revendications

| Lieu de la recherche | Date d'achèvement de la recherche | Examinateur |
|---|---|---|
| La Haye | 4 mars 2015 | Suarez Y Gonzalez, R |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

.........................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 14 30 6811

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

04-03-2015

| Document brevet cité au rapport de recherche | | Date de publication | Membre(s) de la famille de brevet(s) | | Date de publication |
|---|---|---|---|---|---|
| US 2011227871 | A1 | 22-09-2011 | CA | 2800332 A1 | 29-09-2011 |
| | | | CN | 102906676 A | 30-01-2013 |
| | | | CN | 103127716 A | 05-06-2013 |
| | | | EP | 2537085 A2 | 26-12-2012 |
| | | | US | 2011227871 A1 | 22-09-2011 |
| | | | US | 2012019480 A1 | 26-01-2012 |
| | | | WO | 2011119552 A2 | 29-09-2011 |
| EP 2405330 | A2 | 11-01-2012 | AU | 2011203122 A1 | 02-02-2012 |
| | | | CA | 2745235 A1 | 08-01-2012 |
| | | | CN | 102371070 A | 14-03-2012 |
| | | | EP | 2405330 A2 | 11-01-2012 |
| | | | NZ | 593922 A | 26-10-2012 |
| | | | US | 2012007808 A1 | 12-01-2012 |
| | | | US | 2012007817 A1 | 12-01-2012 |
| WO 2007017848 | A2 | 15-02-2007 | EP | 1922602 A2 | 21-05-2008 |
| | | | JP | 4810573 B2 | 09-11-2011 |
| | | | JP | 2009505209 A | 05-02-2009 |
| | | | US | 2007062852 A1 | 22-03-2007 |
| | | | US | 2009322352 A1 | 31-12-2009 |
| | | | WO | 2007017848 A2 | 15-02-2007 |

EPO FORM P0460

Pour tout renseignement concernant cette annexe : voir Journal Officiel de l'Office européen des brevets, No.12/82